Europäisches Patentamt

European Patent Office

Office européen des brevets

(19)

(11) Publication number: **0 242 073**
**B1**

(12) # EUROPEAN PATENT SPECIFICATION

(45) Date of publication of the patent specification:
**31.01.90**

(51) Int. Cl.⁴: **A63B 55/08**

(21) Application number: **87302677.7**

(22) Date of filing: **27.03.87**

(54) Seat structure for attachment to a golf cart or trolley.

(30) Priority: **17.04.86 GB 8609424**

(43) Date of publication of application:
**21.10.87 Bulletin 87/43**

(45) Publication of the grant of the patent:
**31.01.90 Bulletin 90/5**

(84) Designated Contracting States:
**AT BE CH DE ES FR GR IT LI LU NL SE**

(56) References cited:
**AU-B- 517 180**
**GB-A- 696 699**
**GB-A- 954 582**
**US-A- 3 506 280**
**US-A- 4 550 930**

(73) Proprietor: **ACUSHNET LIMITED, Orchard Road, Great Shelford Cambridge CB2 5AB(GB)**

(72) Inventor: **Potter, George percival, 44 Tavistock Road, Cambridge(GB)**

(74) Representative: **Topps, Ronald et al, D. YOUNG & CO 10 Staple Inn, London WC1V 7RD(GB)**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid (Art. 99(1) European patent convention).

## Description

This invention relates to a seat structure which can be attached to a cart or trolley for carrying a bag of golf clubs and to a golf cart or trolley provided with such a seat.

When playing a round of golf it is usual for a player to use a hand pulled cart or trolley for transporting a bag of golf clubs around the golf course. There are times when a player has to wait some time before playing a shot and the use of a seat is very desirable at that time.

According to prior art patent GB-A 696 699 a hand propelled vehicle with an attached seat structure is described wherein the seat structure is permanently fixed to the vehicle. The seat structure, which when in a folded position forms a handle by which the vehicle may be pulled, comprises a stem member with a seat at one end and a point at the other end for engaging with the ground, a member for mounting the seat structure onto the vehicle, and shock absorbing means, comprising two springs through which the stem is connected to the mounting member.

With such a fixed seat structure as described in GB-A 696 699, problems may be encountered by the user in maintaining balance when using the seat on uneven ground. Such a problem is overcome by the present invention wherein a pivot action between the stem member of the seat structure and the mounting member permits the seat structure to be more easily used on uneven ground. Furthermore, a resilient means is provided which, when the stem member is moved about the axis of the pivot, returns the stem member to a mean or equilibrium position. Finally, the detachability of the seat structure according to the present invention from the cart permits the use of the seat as a separate entity if so desired.

According to the present invention, there is provided a seat structure attachable to a golf cart comprising a stem member provided with a seat at one end, a tube through which said stem member is slidable, a first resilient means for urging the stem member relative to the tube in the direction of the seat, and a mounting member connected to said tube for mounting the structure on the cart; characterised in that said mounting member comprises means for detachably connecting the seat structure to a support member on the golf cart, and in that said mounting member is pivotally connected to the tube by a pivot permitting pivoted movement of the tube about an axis perpendicular to the tube, a second resilient means being provided operating between the tube and the mounting member whereby pivoted movement of the tube about the pivot in either direction on opposite sides of a mean position takes place against the bias of the resilient means.

An embodiment of the invention will now be described, by way of an example, with reference to the accompanying drawings, in which:

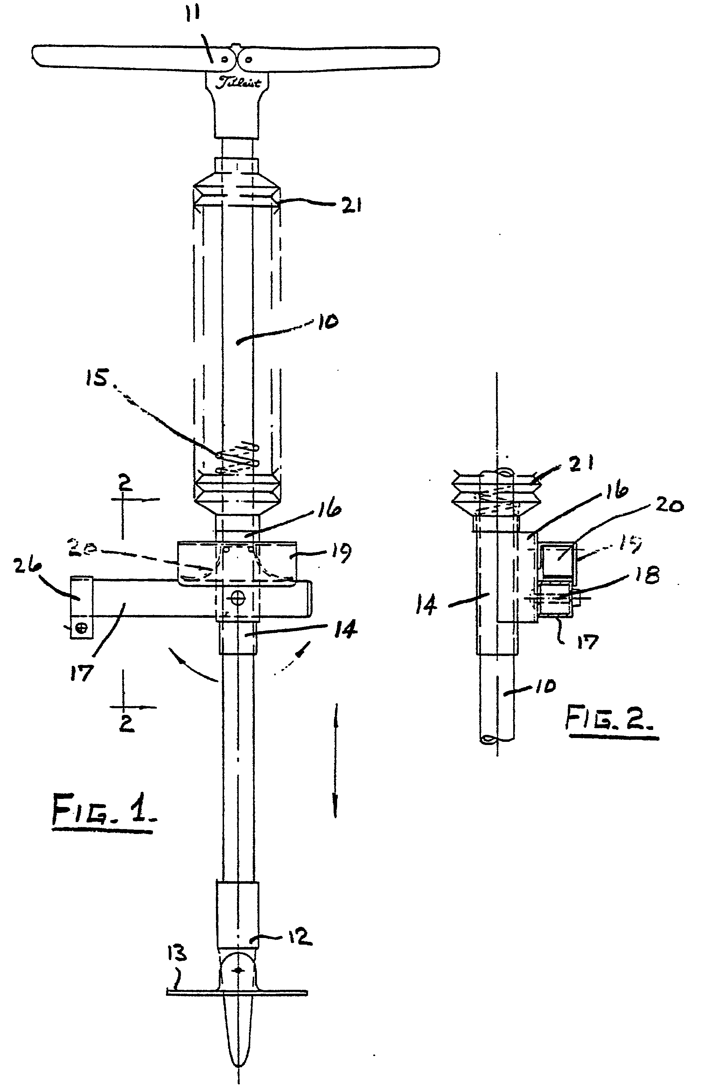

Figure 1 is a side elevation of a seat structure according to the present invention;

Figure 2 is a section taken along the line 2–2 indicated on Figure 1; and

Figure 3 is a partial side elevation showing the seat structure attached to a golf cart or trolley.

The seat structure comprises a tubular stem member 10 which is preferably formed of aluminium and which is provided at one end (the upper end) with a seat 11 which is a folding seat similar to seats used on so-called shooting sticks, and is provided at its other end (the lower end) with a pointed foot member 12 having a pivoted plate member 13 which again is similar to such members provided on the lower end of a shooting stick.

The stem member 10 extends through a tube 14 which is lined with a plastics liner and is slidable in the tube 14. Extending between the tube 14 and the seat 11 is a coil spring 15 which surrounds the stem member 10. The tube 14 is welded to a channel section bracket 16 which is pivotally connected to a square section tubular mounting member 17 by a bolt 18. It will be appreciated that the stem member 10 can be thus pivoted about the axis of the bolt 18.

Secured to the bracket 16 is a substantially U-section member 19 which extends transversely of the tube 14 and which is located above the mounting member 17. Extending between the member 9 and the mounting member 17 is a flat spring 20 which in side elevation is of channel section. The spring 20 applies a restoring force urging the stem member 10 to an equilibrium or mean position if it is moved about the axis of the bolt 18. The spring 15 is surrounded by a protective gaiter 21.

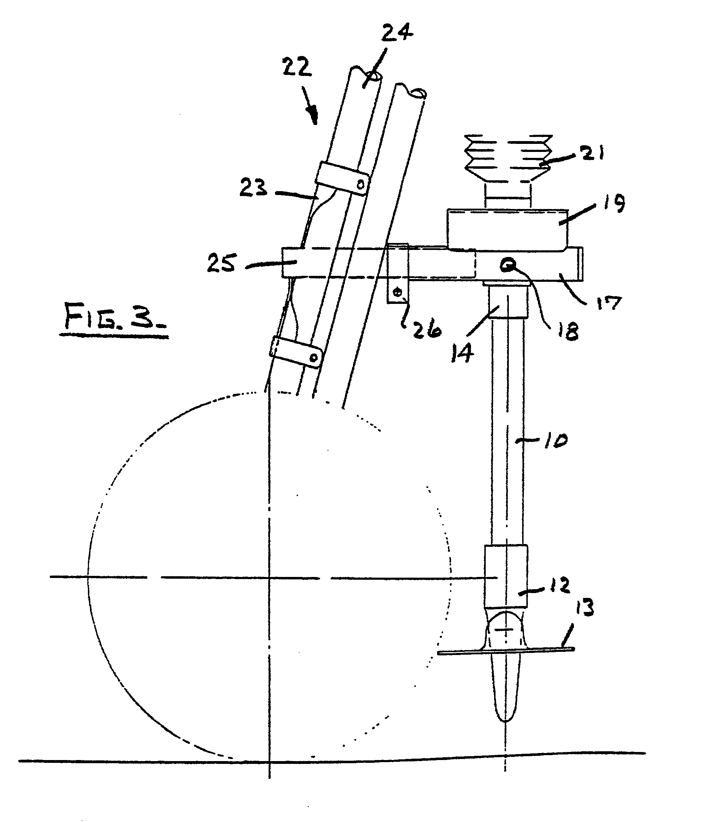

As will be seen from Figure 3, a golf cart or trolley 22 can be provided with a seat support structure which consists of a bracket 23 which is clamped to a structural tube 24 of the cart or trolley 22 and a square section stem or rod 25 onto which the mounting member 17 can be fitted. The mounting member 17 is retained on the stem or rod 25 by a fixing clip or clamp 26. It will be appreciated that by releasing the clip or clamp 26 the seat structure can be disengaged from the rod 25 and used independently of the cart or trolley 22.

In use the compression spring 15 moves the stem member 10 away from the ground when the weight of the user is removed and the pivot action of the stem member 10 allows the seat structure to be used on uneven ground, i.e. on a slope.

## Claims

1. A seat structure attachable to a golf cart (22), comprising a stem member (10) provided with a seat (11) at one end, a tube (14) through which said stem member (10) is slidable, a first resilient means (15) for urging the stem member relative to the tube (14) in the direction of the seat (11), and a mounting member (17) connected to said tube (14) for mounting the structure on the cart (22), characterised in that said mounting member (17) comprises means (26) for detachably connecting the seat structure to a support member (25) on the golf cart (22) and in that said mounting member (17) is pivotally connected to the tube (14) by a pivot (18) permitting pivoted movement of the tube (14) about an axis perpendicular to the tube, a second resilient means (20) being provided operating between the tube (14) and the mounting member (17) whereby pivoted movement of the tube (14) about the pivot (18) in either direction on opposite sides of a mean position takes place against the bias of the resilient means (20).

2. A seat structure according to claim 1, wherein said tube (14) is lined with a plastics liner.

3. A seat structure according to claim 1 or 2, wherein said tube (14) is scured to a bracket (16, 19) which is connected by said pivot (18) to the mounting member (17).

4. A seat structure according to claim 3, wherein said second resilient means (20) comprises a channel section plate spring located between said bracket (16, 19) and said mounting member (17).

5. A seat structure according to any one of the preceding claims, wherein said mounting member (17) comprises a tubular member provided at one end with a clamp or clip (26) for retaining the mounting member (17) on a stem or rod (25) forming the structure provided on the trolley or cart (22).

6. A seat structure according to any one of the preceding claims, wherein said first resilient means (15) comprises a coil spring surrounding said stem member (10).

7. A seat structure according to any one of the preceding claims, wherein said first resilient means (15) is surrounded by a protective gaiter (21).

8. A seat structure according to any one of the preceding claims, wherein said seat (11) is foldable about one end of the stem member (10).

9. A seat structure according to any one of the preceding claims, wherein the other end of the stem member (10) is provided with a pointed foot member (12) having a pivotable ground engaging plate (13).

10. A golf cart or trolley (22) provided with a seat structure as claimed in any one of the preceding claims.

## Patentansprüche

1. An einem Golfwagen (22) anbringbarer Sitzaufbau mit einem Stangenteil (10), welches an einem Ende mit einem Sitz (11) versehen ist, einem Rohr (14), durch welches das Stangenteil (10) gleitbar ist, einer ersten Federeinrichtung (15), um das Stangenteil relativ zu dem Rohr (14) in Richtung des Sitzes (11) zu drücken, und mit einem Befestigungsteil (17), welches mit dem Rohr (14) verbunden ist, um den Aufbau an dem Wagen (22) zu befestigen, dadurch gekennzeichnet, daß das Befestigungsteil (17) Mittel für eine lösbare Verbindung des Sitzaufbaus mit einem Stützteil (25) auf dem Golfwagen (22) aufweist und daß das Befestigungsteil (17) schwenkbar mit dem Rohr (14) über einen Zapfen (18) verbunden ist, der eine Schwenkbewegung des Rohres (14) um eine Achse senkrecht zum Rohr zuläßt, daß eine zweite Federeinrichtung (20) vorgesehen ist, welche zwischen dem Rohr (14) und dem Befestigungsteil (17) wirkt, wodurch die Schwenkbewegung des Rohres (14) um den Zapfen (18) in jeder Richtung auf gegenüberliegenden Seiten einer Mittenstellung gegen die Vorspannung der Federeinrichtung (20) stattfindet.

2. Sitzaufbau nach Anspruch 1, wobei das Rohr (14) mit einer Kunststoffbeschichtung versehen ist.

3. Sitzaufbau nach Anspruch 1 oder 2, wobei das Rohr (14) an einem Träger (16, 19) befestigt ist, der über den Zapfen (18) mit dem Befestigungsteil (17) verbunden ist.

4. Sitzaufbau nach Anspruch 3, wobei die zweite Federeinrichtung (20) eine U-förmige Blattfeder aufweist, welche zwischen dem Träger (16, 19) und dem Befestigungsteil (17) angeordnet ist.

5. Sitzaufbau nach einem der vorstehenden Ansprüche, wobei das Befestigungsteil (17) ein rohrförmiges Teil aufweist, welches an einem Ende mit einer Klammer oder einer Klemme (26) zum Halten des Befestigungsteils (17) an einer Stange oder an einem Stab (25) versehen ist, die den Stützaufbau bildet, der an dem Karren oder Wagen (22) vorgesehen ist.

6. Sitzaufbau nach einem der vorstehenden Ansprüche, wobei die erste Federeinrichtung (15) eine Schraubenfeder aufweist, welche das Stangenteil (10) umgibt.

7. Sitzaufbau nach einem der vorstehenden Ansprüche, wobei die erste Federeinrichtung (15) von einer Schutzgamasche (21) umgeben ist.

8. Sitzaufbau nach einem der vorstehenden Ansprüche, wobei der Sitz (11) um ein Ende des Stangenteils (10) herum faltbar ist.

9. Sitzaufbau nach einem der vorstehenden Ansprüche, wobei das andere Ende des Stangenteils (10) mit einem spitzen Fußteil (12) versehen ist, welches eine schwenkbare, mit dem Boden in Eingriff tretende Platte (13) hat.

10. Golfwagen oder Karren (22), versehen mit einem Sitzaufbau nach einem der vorstehenden Ansprüche.

## Revendications

1. Armature de siège pouvant être fixée à un chariot de golf (22), comportant une jambe (10) munie d'un siège (11) à une extrémité, un tube (14) à travers lequel peut coulisser ladite jambe (10), un premier moyen élastique (15) pour pousser la jambe par rapport au tube (14) dans la direction du siège (11), et un support (17) relié audit tube (14) en vue de supporter l'armature sur le chariot (22), caractérisée en ce que ledit support (17) comporte des moyens (26) en vue de relier de façon amovible l'armature de siège à un support (25) sur le chariot de golf (22) et en ce que ledit support (17) est relié à pivotement au tube (14) par un pivot (18) permettant un mouvement de pivotement du tube (14) autour d'un axe perpendiculaire au tube, un second moyen élastique (20) étant prévu agissant entre le tube (14) et le support (17) de telle sorte que le mouvement de pivotement du tube (14) autour du pivot (18) dans l'un ou l'autre sens de part et d'autre d'une position moyenne s'effectue à l'encontre de la sollicitation du moyen élastique (20).

2. Armature de siège selon la revendication 1, dans laquelle ledit tube (14) est doublé d'une chemise en plastique.

3. Armature de siège selon la revendication 1 ou 2, dans laquelle ledit tube (14) est fixé à un support (16, 19) qui est relié par ledit pivot (18) au support (17).

4. Armature de siège selon la revendication 3, dans laquelle ledit second moyen élastique (20) comporte un ressort en forme de U en coupe disposé entre le support (16, 19) et ledit support (17).

5. Armature de siège selon l'une quelconque des revendications précédentes, dans laquelle ledit support (17) comporte un élément tubulaire muni à une extrémité d'une attache ou pince (26) pour retenir le support (17) sur une tige (25) formant la structure support prévue sur le chariot (22).

6. Armature de siège selon l'une quelconque des revendications précédentes, dans laquelle ledit premier moyen élastique (15) comporte un ressort hélicoïdal entourant ladite jambe (10).

7. Armature de siège selon l'une quelconque des revendications précédentes, dans laquelle ledit premier moyen élastique (15) est entouré d'une gaine protectrice (21).

8. Armature de siège selon l'une quelconque des revendications précédentes, dans laquelle ledit siège (11) est repliable autour d'une extrémité de la jambe (10).

9. Armature de siège selon l'une quelconque des revendications précédentes, dans laquelle l'autre extrémité de la jambe (10) est munie d'un pied effilé (12) possédant une plaque pivotante (13) venant en contact du sol.

10. Chariot de golf (22) muni d'une armature de siège selon l'une quelconque des revendications précédentes.

11

21

10

15

2

16

2ᴗ

26

19

14

17

2

FIG. 1.

12

13

21

16

20

15

14

18

17

10

FIG. 2.

FIG. 3.